# EUROPEAN PATENT APPLICATION

(11) **EP 2 682 864 A1**
(43) Date of publication of application: **08.01.2014**
(21) Application number: 13173302.4
(22) Date of filing: 21.06.2013
(51) Int. Cl.: G06F 9/445, G06F 9/44, G06F 11/14

(54) **Information Processing Apparatus, Information Processing Method, and Program**

(30) Priority: 02.07.2012 JP 2012148357
(71) Applicant: Sony Corporation, Tokyo 108-0075 (JP)
(72) Inventor: Koide, Keisuke, Minato-ku, Tokyo 108-0075 (JP); Nakazima, Shinzi, Minato-ku, Tokyo 108-0075 (JP); Komatsu, Shuhei, Minato-ku, Tokyo 108-0075 (JP); Nakagawa, Noriaki, Minato-ku, Tokyo 108-0075 (JP); Imai, Takahiro, Minato-ku, Tokyo 108-0075 (JP)
(74) Representative: Mills, Julia

(57) **Abstract**

There is provided an information processing apparatus including a semiconductor storage device which stores a BIOS (Basic Input Output System), an auxiliary storage device which stores a plurality of pieces of BIOS related data capable of being used by the BIOS, and a control section which writes one or more pieces of BIOS related data to be used by the BIOS, from among the plurality of pieces of BIOS related data stored in the auxiliary storage device, to the semiconductor storage device.

## Description

The present disclosure relates to an information processing apparatus, an information processing method, and a program.

In the general architecture of general-purpose computers, firmware called the BIOS (Basic Input Output System) is arranged between hardware, such as an input device, output device and storage device, and an OS (Operating System). The BIOS is usually stored in a semiconductor storage device mounted on a circuit board such as a motherboard. When a computer is started, the BIOS is executed first. Then, the BIOS loads the OS from an auxiliary storage device to a processor and main storage device. When a hardware failure occurs, the BIOS also has the role of operating the minimum functions of the computer and enabling work for cause investigation and recovery of the failure.

The data size of the BIOS has tended to increase in recent years. For example, the addition of parameters and multilingual support enabled to be set through a BIOS screen are one cause of the increase in the data size of the BIOS. However, the cost per unit capacity of a semiconductor storage device is relatively expensive. Therefore, it is undesirable from the viewpoint of cost for the data size of the BIOS to increase.

JP 2007-79841A proposes to avoid an increase in the size of a semiconductor storage device by storing language data for multilingual support of the BIOS in an auxiliary storage device, such as a hard disk drive (HDD), which is not the semiconductor storage device.

However, the auxiliary storage device represented as an HDD has a disadvantage in that the failure resistance is low compared to that of a semiconductor storage device. Therefore, in a technique which stores language data for the BIOS on an auxiliary storage device, there is a risk that the language data will be lost due to a failure of the auxiliary storage device. For example, for a user whose native language is Japanese, work for cause investigation and recovery of a failure will be difficult when Japanese language data is lost, even if a BIOS screen is provided in some default language (for example, English).

Therefore, it would be desirable to provide an arrangement which can save the capacity of a semiconductor storage device necessary for the BIOS while reducing the risk of data loss in the event of a failure.
Various respective aspects and features of the invention are defined in the appended claims. Combinations of features from the dependent claims may be combined with features of the independent claims as appropriate and not merely as explicitly set out in the claims.

According to an embodiment of the present disclosure, there is provided an information processing apparatus, including a semiconductor storage device which stores a basic input output system (BIOS), an auxiliary storage device which stores a plurality of pieces of BIOS related data capable of being used by the BIOS, and a control section which writes one or more pieces of BIOS related data to be used by the BIOS, from among the plurality of pieces of BIOS related data stored in the auxiliary storage device, to the semiconductor storage device.

Further, according to an embodiment of the present disclosure, there is provided an information processing method executed by a control section of an information processing apparatus including a semiconductor storage device which stores a basic input output system (BIOS) and an auxiliary storage device which stores a plurality of pieces of BIOS related data capable of being used by the BIOS, the information processing method including writing one or more pieces of BIOS related data to be used by the BIOS, from among the plurality of pieces of BIOS related data stored in the auxiliary storage device, to the semiconductor storage device.

Further, according to an embodiment of the present disclosure, there is provided a program for causing a computer to function as, the computer controlling an information processing apparatus including a semiconductor storage device which stores a basic input output system (BIOS) and an auxiliary storage device which stores a plurality of pieces of BIOS related data capable of being used by the BIOS, a control section which writes one or more pieces of BIOS related data to be used by the BIOS, from among the plurality of pieces of BIOS related data stored in the auxiliary storage device, to the semiconductor storage device.

According to the embodiments of the technology of the present disclosure, it becomes possible to save the capacity of a semiconductor storage device necessary for the BIOS while reducing the risk of data loss in the event of a failure.
Embodiments of the invention will now be described with reference to the accompanying drawings, throughout which like parts are referred to by like references, and in which:

FIG. 1 is a block diagram which shows an example of a hardware configuration of an information processing apparatus according to an embodiment;
FIG. 2A is an explanatory diagram for describing a first example of an existing technique for holding data used by the BIOS;
FIG. 2B is an explanatory diagram for describing a second example of an existing technique for holding data used by the BIOS;
FIG. 3A is an explanatory diagram for describing a first example of a technique implemented in accordance with the technology according to the present disclosure;
FIG. 3B is an explanatory diagram for describing a second example of a technique implemented in accordance with the technology according to the present disclosure;
FIG. 4A is a first explanatory diagram for describing a first example of BIOS related data;
FIG. 4B is a second explanatory diagram for describing the first example of BIOS related data;
FIG. 4C is a third explanatory diagram for describing the first example of BIOS related data;
FIG. 5A is a first explanatory diagram for describing a second example of BIOS related data;
FIG. 5B is a second explanatory diagram for describing the second example of BIOS related data;
FIG. 6A is an explanatory diagram for describing a first example of a technique for selecting the BIOS related data;
FIG. 6B is an explanatory diagram for describing a second example of a technique for selecting the BIOS related data;
FIG. 6C is an explanatory diagram for describing a third example of a technique for selecting the BIOS related data;
FIG. 7A is a first explanatory diagram for describing a first example of a user interface;
FIG. 7B is a second explanatory diagram for describing the first example of a user interface;
FIG. 7C is an explanatory diagram for describing a second example of a user interface;
FIG. 8A is a flow chart which shows a first example of the flow of processes according to an embodiment of the present disclosure; and
FIG. 8B is a flow chart which shows a second example of the flow of processes according to an embodiment of the present disclosure.

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

A description will be made in the following order.
1. Basic Principles
2. Examples of BIOS Related Data
3. Selection of the BIOS Related Data
4. User Interfaces
5. Flow of Processes
6. Conclusion

### <1. Basic Principles>

### [1-1. Hardware configuration example]

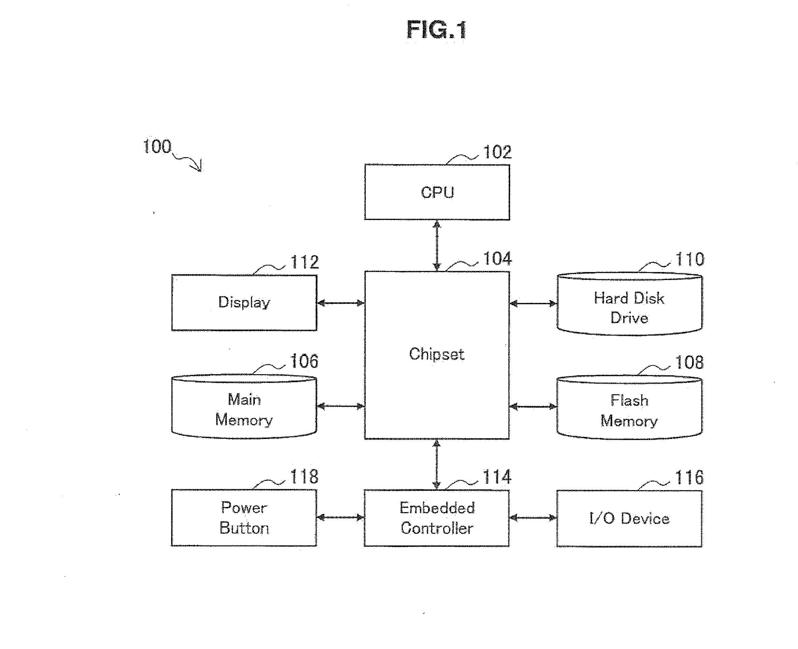

First, the basic principles of the technology according to the present disclosure will be described by using FIGS. 1 to 3. The technology according to the present disclosure is capable of being generally applied to a computer which has an architecture including a semiconductor device, which stores the BIOS, and an auxiliary storage device. As an example, the technology according to the present disclosure may be applied to an information processing apparatus, such as a PC (Personal Computer), a workstation, a smartphone, or a PDA (Personal Digital Assistant).

FIG. 1 is a block diagram which shows an example of a hardware configuration of an information processing apparatus 100 according to an embodiment of the present disclosure. With reference to FIG. 1, the information processing apparatus 100 includes a CPU (Central Processing Unit) 102, a chipset 104, a main memory 106, a flash memory 108, an HDD (Hard Disk Drive) 110, a display 112, an EC (Embedded Controller) 114, an input/output device 116, and a power button 118.

The CPU 102 is a control section which controls the general functions of the information processing apparatus 100. The chipset 104 mutually connects the CPU 102, the main memory 106, the flash memory 108, the HDD 110, and the EC 114. The main memory 106 is typically constituted of a RAM (Random Access Memory), and provides memory space for the operations of the CPU 102. The flash memory 108 is an example of a semiconductor device which stores the BIOS, and stores a BIOS program and at least one piece of BIOS related data. The HDD 110 is an example of an auxiliary storage device, and stores programs and data for an OS (Operating System) and applications. The display 112 displays an output image from the information processing apparatus 100. The EC 114 is an integrated controller for controlling the hardware of the information processing apparatus 100. The input/output device 116 is a device which is built into the information processing apparatus 100 or is connected to the information processing apparatus 100, and can include a keyboard, pointing device, speakers, microphone and the like. The power button 118 is a button which is pressed when a user starts the information processing apparatus 100.

### [1-2. Description of the problem]

From within the hardware configuration of the information processing apparatus 100 shown in the example of FIG. 1, the flash memory 108 and the HDD 110 operate as non-volatile storage media. Here, the semiconductor storage device represented as a flash memory and the auxiliary storage device represented as an HDD have features which are mutually different from the perspectives of unit price, failure resistance, and data transfer rate.

A semiconductor storage device generally has the features of a high price per unit capacity (that is, the unit price), a high resistance to shock and vibration (that is, a high failure resistance), and a fast data transfer rate. Therefore, the BIOS which mediates the basic input/output between the OS and the hardware is usually stored in the semiconductor storage device. Note that other types of storage devices may be used instead of a flash memory as the semiconductor storage device.

In contrast to this, when compared to the above described semiconductor storage device, an auxiliary storage device has the features of a low unit price, a low resistance to shock and vibration (that is, a low failure resistance), and a slow data transfer rate. Therefore, programs and data, which are not as important as the BIOS for the basic operations of the apparatus and which have a large data size, are stored in the auxiliary storage device. Note that other types of storage devices may be used instead of an HDD as the auxiliary storage device.

Incidentally, the data size of the BIOS has tended to increase in recent years. For example, if the number of parameters a user is capable of setting through the BIOS screen increases, the data size of the BIOS screen for setting these parameters will increase. Further, in the case where an apparatus is sold in various regions where different native languages are spoken, a large amount of language data is provided to support various languages for the same BIOS screen. In addition, attempts have been made to adopt functions in the BIOS which support work for recovery or the like when hardware failure occurs. However, since the unit price of a semiconductor storage device such as described above is relatively high, it is undesirable from the viewpoint of cost for the data size of the BIOS to endlessly increase.

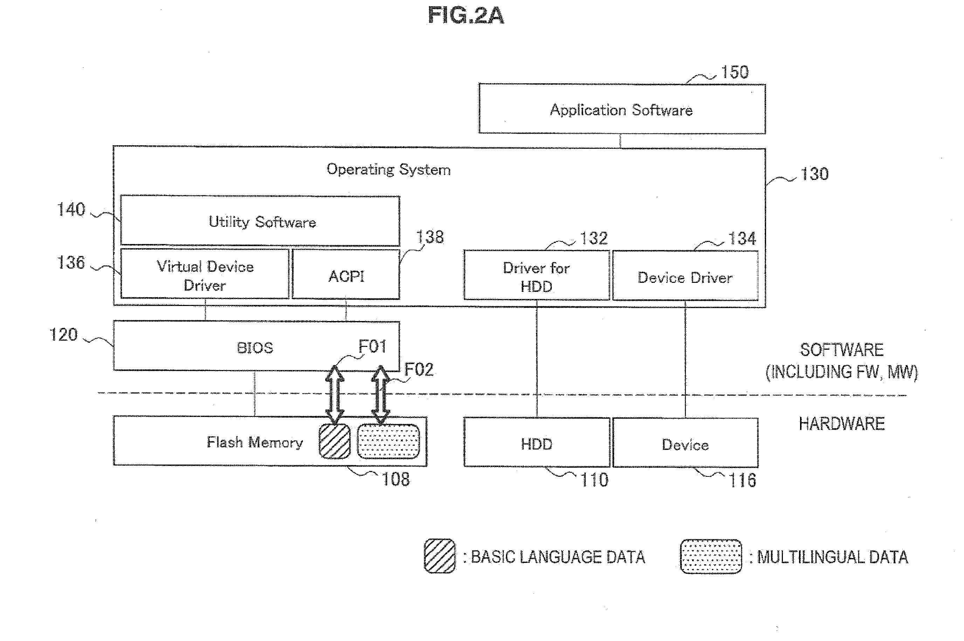

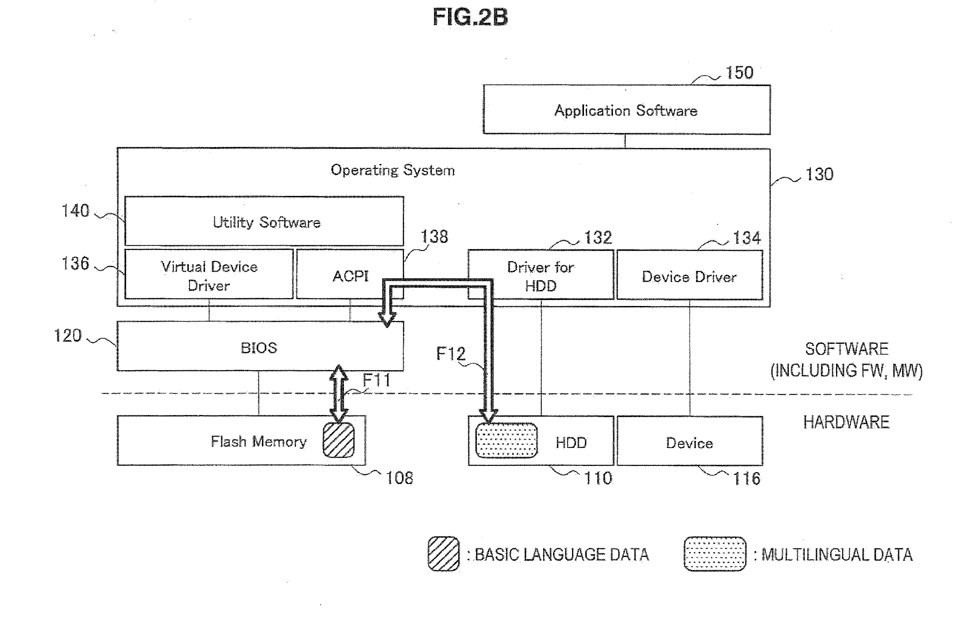

FIGS. 2A and 2B conceptually show two examples of an existing technique for holding data used by the BIOS. Note that here, the BIOS provides multilingual support. That is, the BIOS provides a user with a BIOS screen by using either basic language data described in a default language or multilingual data described in one or more other supported languages.

With reference to FIG. 2A, a logical layered structure of a computer is shown which includes a BIOS 120, an OS 130, and application software 150. The OS 130 includes a driver for the HDD 132, a device driver for other devices 134, a virtual device driver 136, an ACPI (Advanced Configuration and Power Interface) 13 8, and utility software 140. In the first example shown in FIG. 2A, the flash memory 108 stores both basic language data and multilingual data. The BIOS 120 reads out, for example, data corresponding to a language specified by a user from the flash memory 108 (arrows F01 and F02), and displays a BIOS screen which includes text represented in this language on the display 112. In the first example, a size of the storage capacity proportional to the number of supported languages is requested to the flash memory 108. However, in the computer market of recent years, it is desirable to support, for example, 20 or more languages due to the effects of globalization. Therefore, when manufacturing computer products with the existing technique shown in FIG. 2A, the cost of the semiconductor storage device becomes significant, and the price competitiveness of the products may be reduced.

With reference to FIG. 2B, a logical layered structure of a computer is again shown which includes a BIOS 120, an OS 130, and application software 150. In the second example shown in FIG. 2B, the flash memory 108 stores only the basic language data. The HDD 110 stores the multilingual data. For example, when a user specifies a language other than the default language, the BIOS 120 reads out the data corresponding to the specified language from the HDD 110 (arrow F12), and displays a BIOS screen which includes text represented in this language on the display 112. In the second example, since the flash memory 108 only has to store the basic language data, the cost of the product can be controlled compared to that of the first example. However, when a failure occurs in the HDD 110, for example, it may not be possible for the BIOS to access the data corresponding to languages other than the default language. Therefore, the BIOS screen is only displayed in the default language, and it becomes difficult for a user who does not understand the default language to perform work such as failure recovery through the BIOS screen.

It is possible for the technology according to the present disclosure to solve the disadvantages of this existing technology, and to save the capacity of a semiconductor storage device necessary for the BIOS while reducing the risk of data loss in the event of a failure.

### [1-3. Description of the principles]

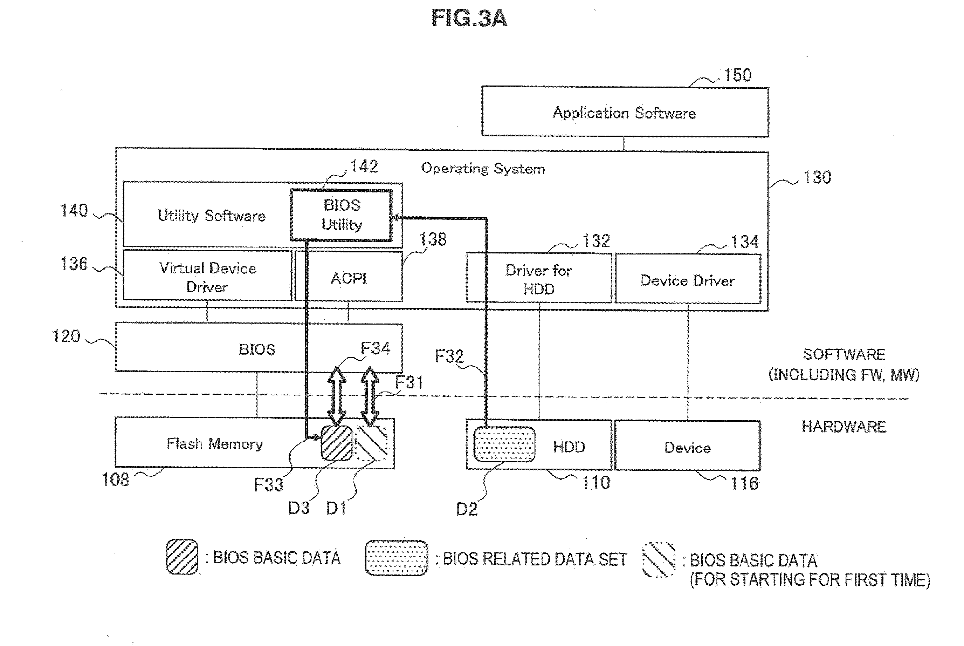

FIG. 3A is an explanatory diagram for describing a first example of a technique implemented in accordance with the technology according to the present disclosure. With reference to FIG. 3A, a logical layered structure of a computer is again shown which includes a BIOS 120, an OS 130, and application software 150. However, the OS 130 includes a BIOS utility 142, which is additionally introduced for implementing the technology according to the present disclosure. The flash memory 108 stores in advance BIOS basic data D1. The HDD 110 stores a BIOS related data set D2.

The BIOS utility 142 may be, for example, one of the utility software which can be provided in a form which is attached to a basic function set of the OS. The BIOS utility 142 is operated, for example, by the CPU 102 executing a utility program stored in the HDD 110.

The BIOS basic data D1 is data used by the BIOS 120 when the information processing apparatus 100 is started for the first time (arrow F31). The BIOS basic data D1 can include the above described basic language data.

The BIOS related data set D2 is a data set which includes a plurality of pieces of BIOS related data capable of being used by the BIOS 120. Each of the BIOS related data may be described in any data format, such as an image, text or program. The BIOS related data set D2 can include the above described multilingual data. Various examples of the BIOS related data will be further described later.

The BIOS basic data D3 is BIOS related data selected from the BIOS related data set D2 (arrow F32), and is written to the flash memory 108 in accordance with an instruction from the BIOS utility 142 (arrow F33). After the BIOS basic data D3 is written, the BIOS 120 uses the BIOS basic data D3 and not the BIOS basic data D1 (arrow F34).

The BIOS utility 142 writes one or more pieces of BIOS related data to be used by the BIOS 120, from among the above described BIOS related data set D2 stored in the HDD 110, to the flash memory 108 as the BIOS basic data D3. The BIOS utility 142 may write data to the flash memory 108, via the virtual device driver 136 or the ACPI 138, and the BIOS 120. The BIOS utility 142 may automatically select the BIOS related data to be written to the flash memory 108. As an example, the BIOS related data can be automatically selected based on an OS setup registered by a user. Alternatively, the BIOS utility 142 may allow the user to select the BIOS related data to be written to the flash memory 108. Writing the BIOS related data to the flash memory 108 may be automatically performed, for example, after the BIOS 120 loads the OS 130 at the time of starting the information processing apparatus 100 for the first time, or when the OS setup is changed. Further, the BIOS related data may be written to the flash memory 108 in accordance with an instruction from the user.

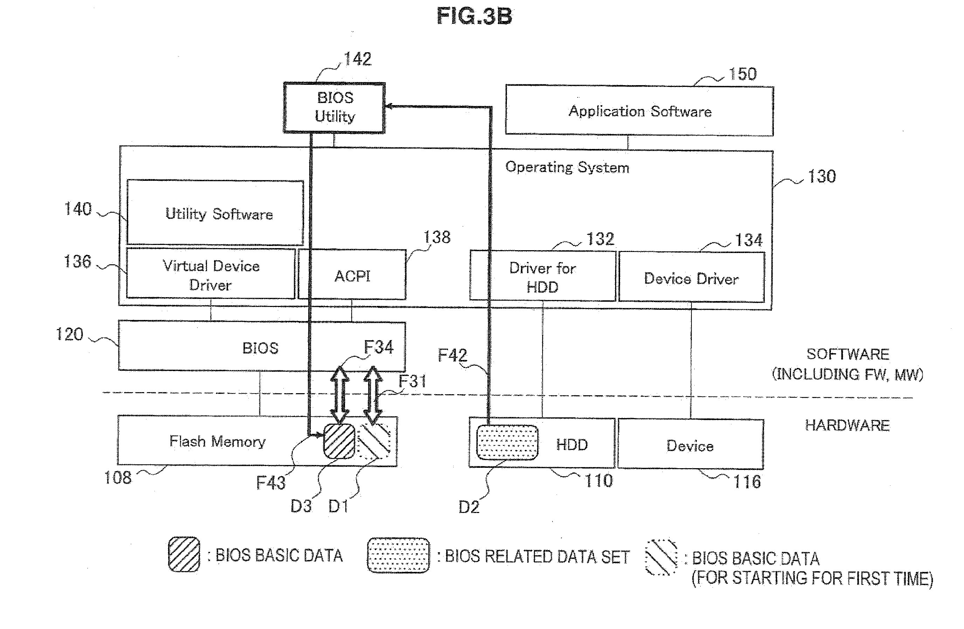

FIG. 3B is an explanatory diagram for describing a second example of a technique implemented in accordance with the technology according to the present disclosure. In the second example, which is different from the first example of FIG. 3A, the BIOS utility 142 is positioned at the application level above the OS 130. That is, in the second example, the BIOS utility 142 is one of the application software which can be installed in the information processing apparatus 100 other than in the OS 130. Here as well, the BIOS utility 142 writes one or more pieces of BIOS related data to be used by the BIOS 120, from among the BIOS related data set D2 stored in the HDD 110, to the flash memory 108 as the BIOS basic data D3.

As shown in the examples of FIGS. 3A and 3B, BIOS related data with a high value for the user can be protected from failure by having the BIOS utility 142 write (write back) the BIOS related data appropriate for individual users to the flash memory 108. Further, since only a part of the entire data set of the BIOS related data set D2 is selectively written back to the flash memory 108, the storage capacity of the flash memory 108 can be saved, and the manufacturing cost of the information processing apparatus 100 can be controlled.

Such a mechanism for both the reinforcement of data protection and the control of manufacturing costs is capable of being applied to various types of data which is described in the following section.

### <2. Examples of BIOS Related Data>

### [2-1. First example]

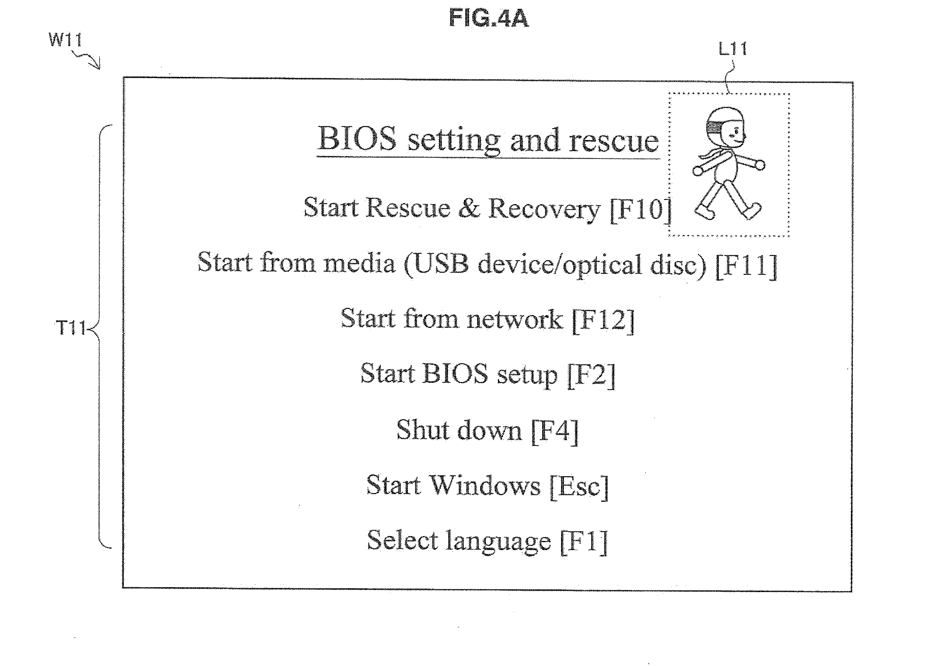

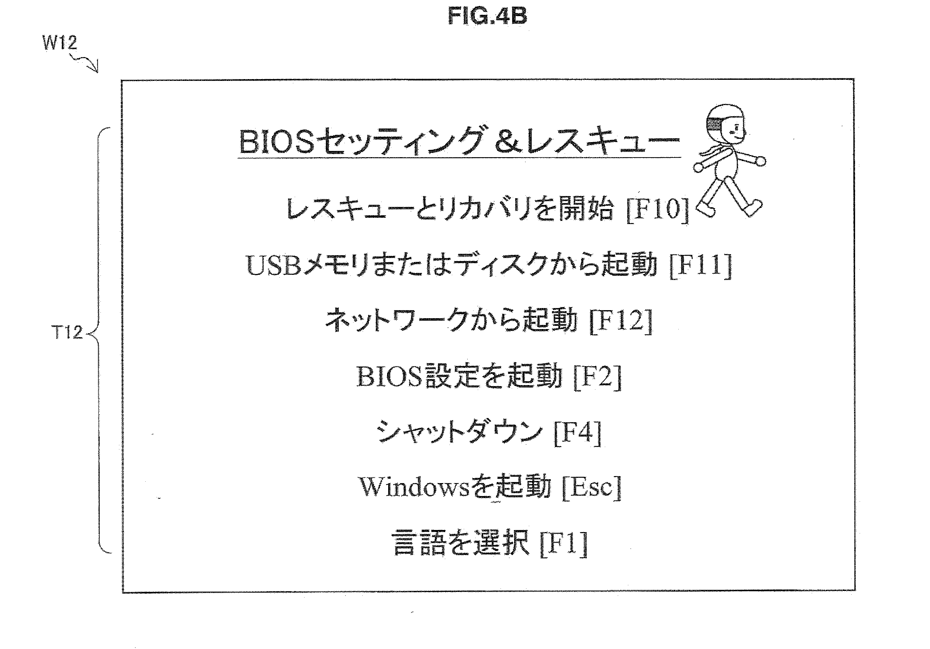

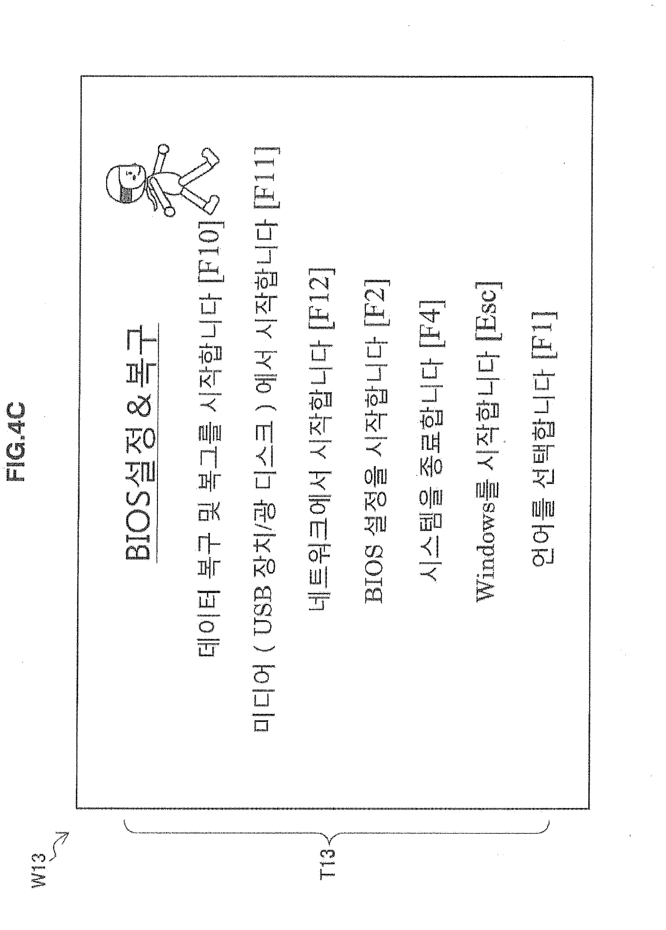

FIGS. 4A to 4C are explanatory diagrams for describing a first example of BIOS related data. With reference to FIG. 4A, a BIOS screen W11 is shown as an example which is displayed for parameter setting and rescue (failure response). The BIOS screen W11 includes text T11 for a title and menu items. The text T11 is described in English. With reference to FIG. 4B, a BIOS screen W12 is shown which has a screen configuration the same as that of the BIOS screen W11. The BIOS screen W12 includes text T12 described in Japanese. With reference to FIG. 4C, a BIOS screen W13 is shown which has a screen configuration the same as that of the BIOS screens W11 and W12. The BIOS screen W13 includes text T13 described in Korean.

The data of each BIOS screen may be implemented as image data. Alternatively, the data of each BIOS screen may be implemented as a combination of screen configuration data and text data. In the latter case, for example, the screen configuration data can display the position of each structural element (the title and menu items) within the screen, and the text data can display text corresponding to each structural element. Image data or text data can be provided for each language capable of being used on the BIOS screen (in the above described example, English, Japanese, and Korean). Such screen data for each language is an example of BIOS related data.

### [2-2. Second example]

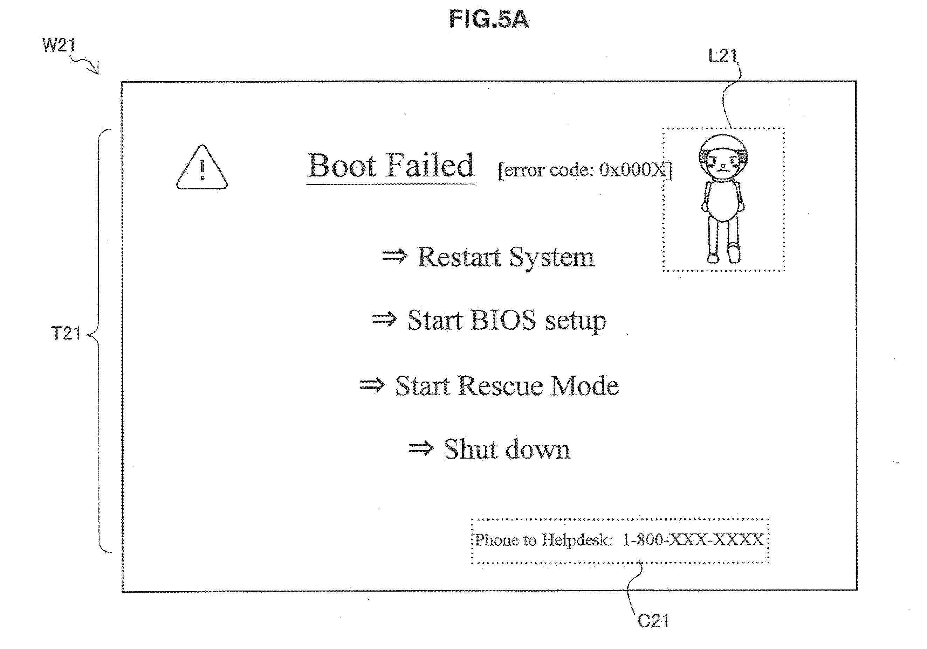

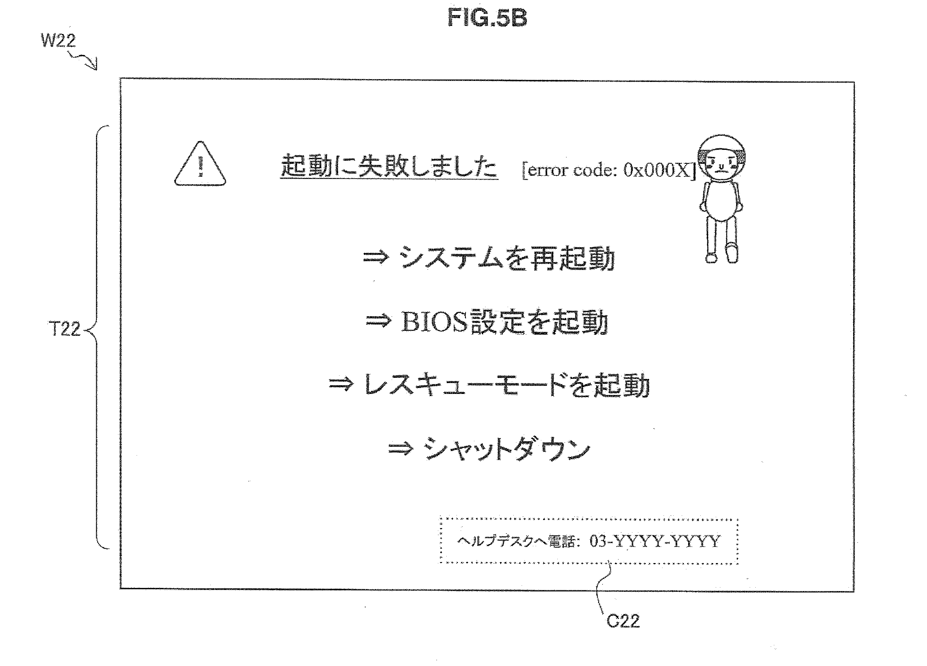

FIGS. 5A and 5B are explanatory diagrams for describing a second example of BIOS related data. With reference to FIG. 5A, a BIOS screen W21 is shown as an example which can be displayed when a boot fails. The BIOS screen W21 includes text T21 and a contact destination field C21. The text T21 is described in English. The contact destination field C21 shows a telephone number of a contact destination for some country. With reference to FIG. 5B, a BIOS screen W22 is shown which has a screen configuration the same as that of the BIOS screen W21. The BIOS screen W22 includes text T22 and a contact destination field C22. The text T22 is described in Japanese. The contact destination field C22 shows a telephone number of a contact destination for Japan.

The contact destination data shown in each contact destination field can be provided for each region (or for each language as an attribute related to the region). Such contact destination data is an example of BIOS related data.

Note that the BIOS screens W11 to W13 shown in the examples of FIGS. 4A to 4C are help screens which can be displayed automatically or in accordance with an operation of a user when a failure occurs. The BIOS screens W21 to W22 shown in the examples of FIGS. 5A and 5B are error screens which can be displayed when a failure occurs. The help screens and error screens are important screens which provide the user with a mechanism for cause investigation and recovery of the failure. Therefore, if the text is not displayed in an appropriate language on these BIOS screens, or an appropriate contact destination is not displayed on these BIOS screens, recovery from the failure can be difficult. However, in the technology according to the present disclosure, since BIOS related data appropriate for a user (for example, screen data or contact destination data) is written back to the flash memory 108 and protected, an appropriate BIOS screen can be displayed even if a failure occurs, for example, in the HDD 110.

### [2-3. Other examples]

The BIOS screen W11 shown in the example of FIG. 4A includes a character image L11. The BIOS screen W21 shown in the example of FIG. 5A includes a character image L21. If such characters displayed on the BIOS screen are capable of being customized, the BIOS screen itself can appeal to the user, and the stress of the user can be reduced, for example, when there is a failure response. Accordingly, the HDD 110 may store a BIOS related data set D2 which includes image data of a plurality of types of characters, and the BIOS utility 142 may write, to the flash memory 108, the image data of one of the characters selected by the user.

Further, a large number of computer products arrange, for example, a logo mark or the like of the product or maker on a startup screen displayed at the time of starting the apparatus. The screen data of such a startup screen (for example, image data of a logo mark) is also capable of being customized in accordance with the technology according to the present disclosure. In this case, the screen data of the startup screen is an example of BIOS related data.

Further, it is beneficial for functions supported by the BIOS to be capable of being customized. For example, it can be considered that assorted functions for failure response are provided to a professional user who has advanced skills related to computers, and only simple functions easy to understand are presented to a general user who has no advanced skills. Accordingly, the HDD 110 may store a BIOS related data set D2 which includes program data for various BIOS functions, and the BIOS utility 142 may write, to the flash memory 108, only a subset of the program data selected in accordance with the skill of the user.

Further, a message field may be included for displaying a message for the user on part of the BIOS screen. The HDD 110 stores a BIOS related data set D2 which includes text data which is a candidate of the messages for the user. For example, each time the information processing apparatus 100 is restarted, the BIOS utility 142 selects a message suitable for the user at that time (for example, a birthday message, a Christmas message or the like) from the BIOS related data set D2, and writes this message to the flash memory 108. The BIOS 120 displays this message written as the BIOS basic data D3 through the message filed of the BIOS screen. Therefore, a freshness or appeal to the user can be provided on the BIOS screen which was dull in the past.

### <3. Selection of the BIOS Related Data>

In the following section, some examples of techniques for the BIOS utility 142 to select the BIOS related data to be written to the flash memory 108 will be described.

### [3-1. First example]

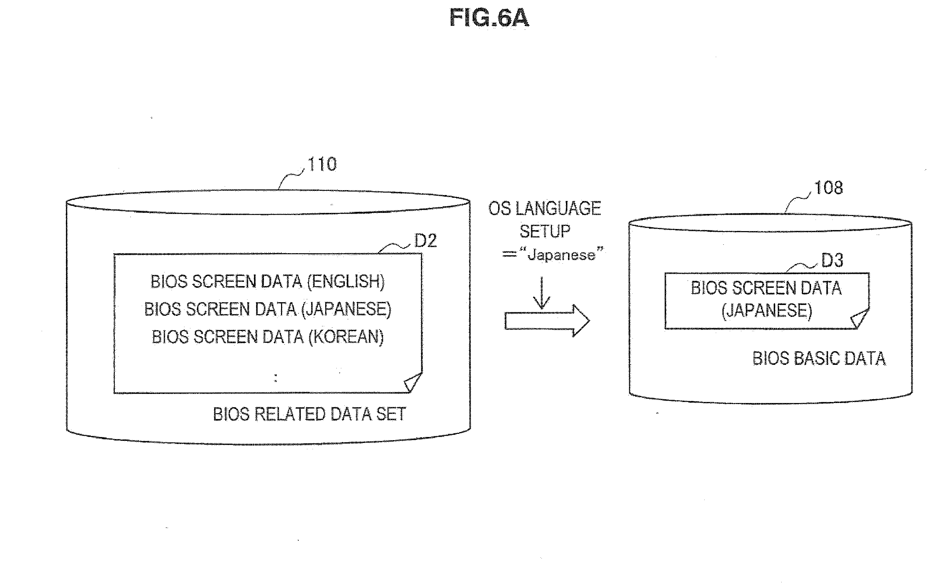

FIG. 6A is an explanatory diagram for describing a first example of a technique for selecting the BIOS related data. In the first example, the BIOS related data is registered by a user for an OS loaded by the BIOS, and is selected based on a language setup of the OS.

A BIOS related data set D2, as an example stored in the HDD 110, is shown on the left hand side of FIG. 6A. The BIOS related data set D2 includes BIOS screen data for each of the various languages capable of being used. When a language setup of the OS is registered by a user, the BIOS utility 142 acquires BIOS screen data corresponding to a registered language from the BIOS related data set D2, and writes the acquired data to the flash memory 108. In the example of FIG. 6A, "Japanese" is registered as the language setup of the OS, and as a result of this, the BIOS screen data for Japanese is written to the flash memory 108 as the BIOS basic data D3.

### [3-2. Second example]

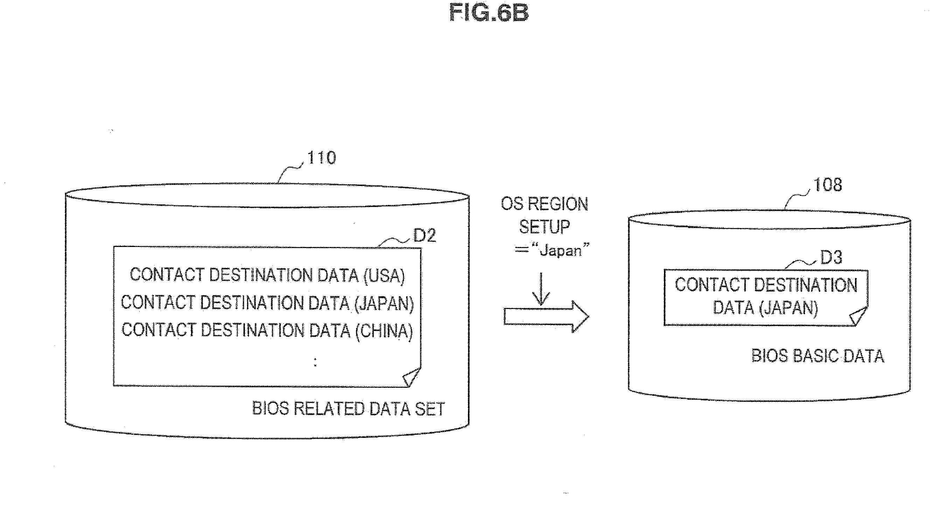

FIG. 6B is an explanatory diagram for describing a second example of a technique for selecting the BIOS related data. In the second example, the BIOS related data is registered by a user for an OS loaded by the BIOS, and is selected based on a region setup of the OS.

A BIOS related data set D2, as another example stored in the HDD 110, is shown on the left hand side of FIG. 6B. The BIOS related data set D2 includes contact destination data for each of the various regions capable of being set. When a region setup of the OS is registered by a user, the BIOS utility 142 acquires contact destination data corresponding to a registered region from the BIOS related data set D2, and writes the acquired data to the flash memory 108. In the example of FIG. 6A, "Japan" is registered as the region setup of the OS, and as a result of this, the contact destination data which shows a contact destination for Japan is written to the flash memory 108 as the BIOS basic data D3.

### [3-3. Third example]

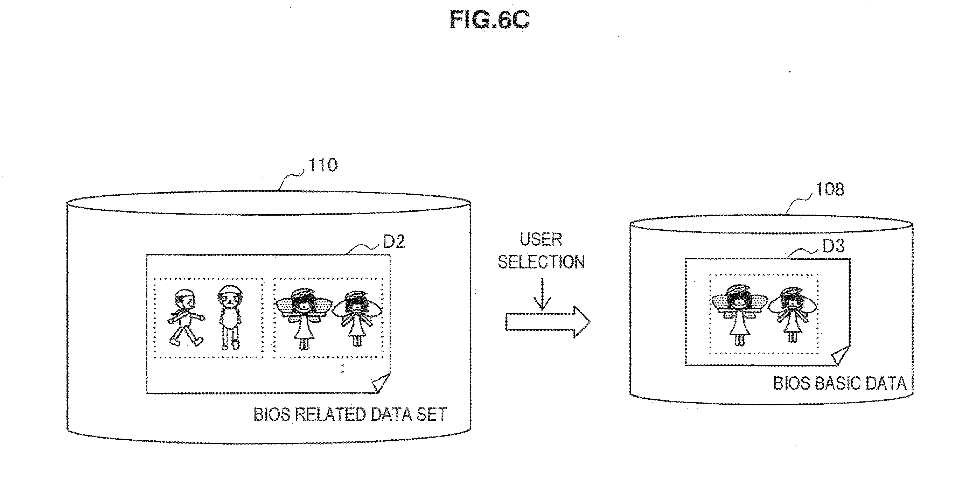

FIG. 6C is an explanatory diagram for describing a third example of a technique for selecting the BIOS related data. In the third example, the BIOS related data is selected or changed by a user via a user interface.

A BIOS related data set D2, as another example stored in the HDD 110, is shown on the left hand side of FIG. 6C. The BIOS related data set D2 includes image data of various types of characters. The BIOS utility 142 displays, on the display 112, a graphical user interface (GUI) for allowing a user to select or change, for example, the character displayed on the BIOS screen, and receives a user input via the input/output device 116. In the example of FIG. 6C, the image data of one character selected by the user is written to the flash memory 108 as the BIOS basic data D3.

Note that each technique for selecting the BIOS related data described in the examples of the present section may be applied to any type of BIOS related data.

### <4. User Interfaces>

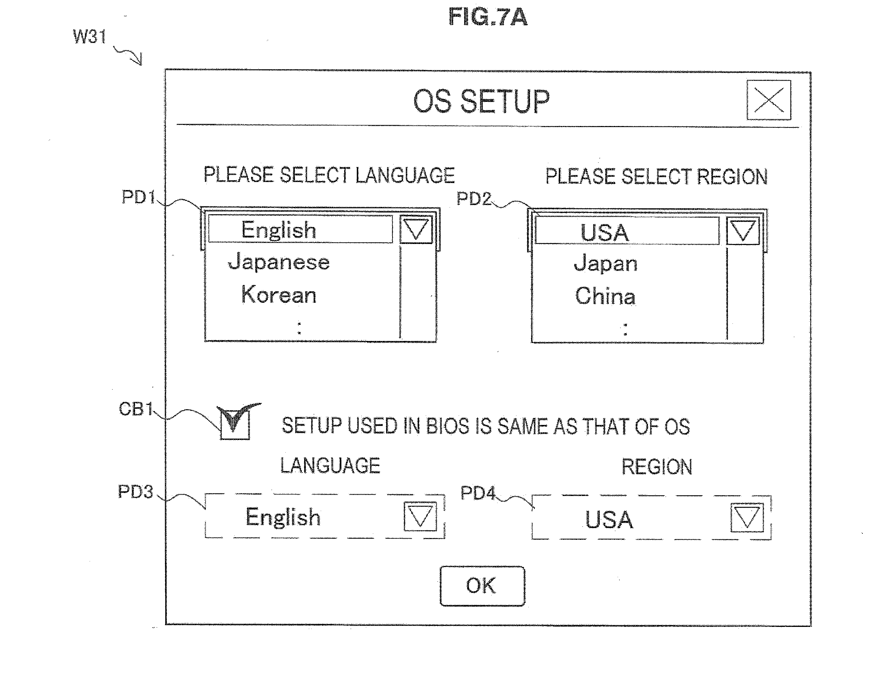

Next, two examples of user interfaces which can be provided in the present embodiment will be described by using FIGS. 7A to 7C.

### [4-1. First example]

With reference to FIG. 7A, an OS setup screen W31 is shown as a first example of a user interface. The OS setup screen W31 includes pull-down menus PD1, PD2, PD3, PD4, and a check box CB1. The pull-down menu PD1 is a user interface (UI) for allowing a user to specify the language of the OS. The pull-down menu PD2 is a UI for allowing the user to specify the region of the OS. The check box CB1 is a UI for allowing the user to specify whether or not the language setup and region setup used in the BIOS are the same as those of the OS.

In the example of FIG. 7A, since the check box CB1 is checked, the language setup and region setup used for the BIOS are the same as those of the OS. In this case, the BIOS utility 142 automatically selects the screen data of the BIOS screen corresponding to the same language as the language of the OS, which is specified by the user via the pull-down menu PD1, as the data to be written to the flash memory 108. Similarly, the BIOS utility 142 automatically selects the contact destination data corresponding to the same region as the region of the OS, which is specified by the user via the pull-down menu PD2, as the data to be written to the flash memory 108. The pull-down menus PD3 and PD4 are disabled.

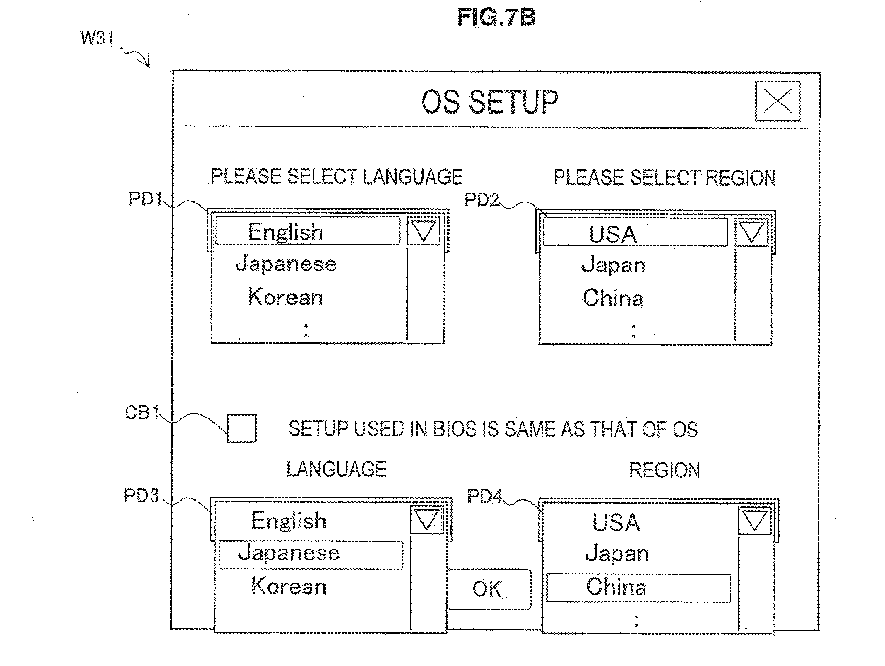

The OS setup screen W31 is shown again in FIG. 7B. In the example of FIG. 7B, the check box CB1 is not checked. Therefore, the language setup and the region setup of the BIOS are not automatically selected, and the pull-down menus PD3 and PD4 are enabled. The pull-down menu PD3 is a UI for allowing the user to specify the language of the BIOS. The pull-down menu PD4 is a UI for allowing the user to specify the region of the BIOS. When the user specifies one of the languages via the pull-down menu PD3, the BIOS utility 142 selects the screen data of the BIOS screen corresponding to the specified language as the data to be written to the flash memory 108. When the user specifies one of the regions via the pull-down menu PD4, the BIOS utility 142 selects the contact destination data corresponding to the specified region as the data to be written to the flash memory 108.

According to the above described first example of a user interface, the user can switch between whether or not to interlock the OS setup and the BIOS setup (to use the same setup) as necessary. Therefore, it becomes possible to interlock, for example, the OS setup and BIOS setup at a normal time, and to change only the BIOS setup to a desired setup without changing the OS setup in the case where there are special circumstances.

### [4-2. Second example]

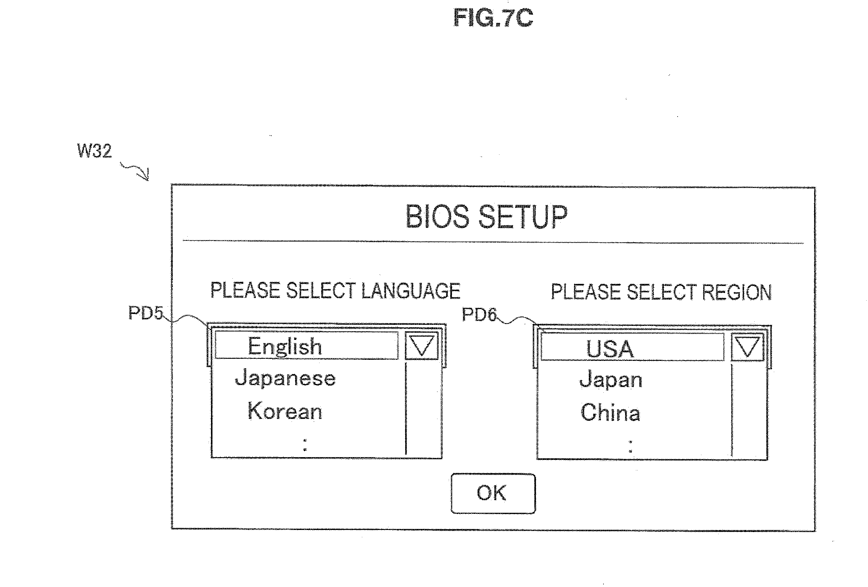

With reference to FIG. 7C, a BIOS setup screen W32 is shown as a second example of a user interface. The BIOS setup screen W32 includes pull-down menus PD5 and PD6. The pull-down menu PD5 is a UI for allowing the user to specify the language of the BIOS. The pull-down menu PD6 is a UI for allowing the user to specify the region of the BIOS. When the user specifies one of the languages via the pull-down menu PD5, the BIOS utility 142 selects the screen data of the BIOS screen corresponding to the specified language as the data to be written to the flash memory 108. When the user specifies one of the regions via the pull-down menu PD6, the BIOS utility 142 selects the contact destination data corresponding to the specified region as the data to be written to the flash memory 108.

According to the above described second example of a user interface, the user can freely change the BIOS setup without depending on the OS setup.

Note that each user interface described in the examples of the present section may be applied to any type of BIOS related data.

### <5. Flow of Processes>

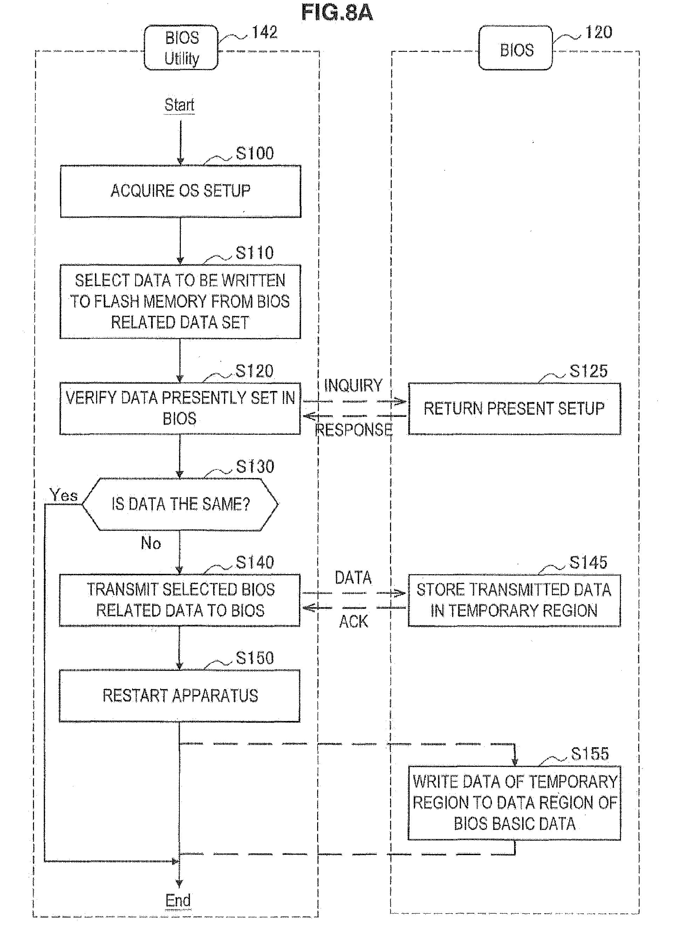

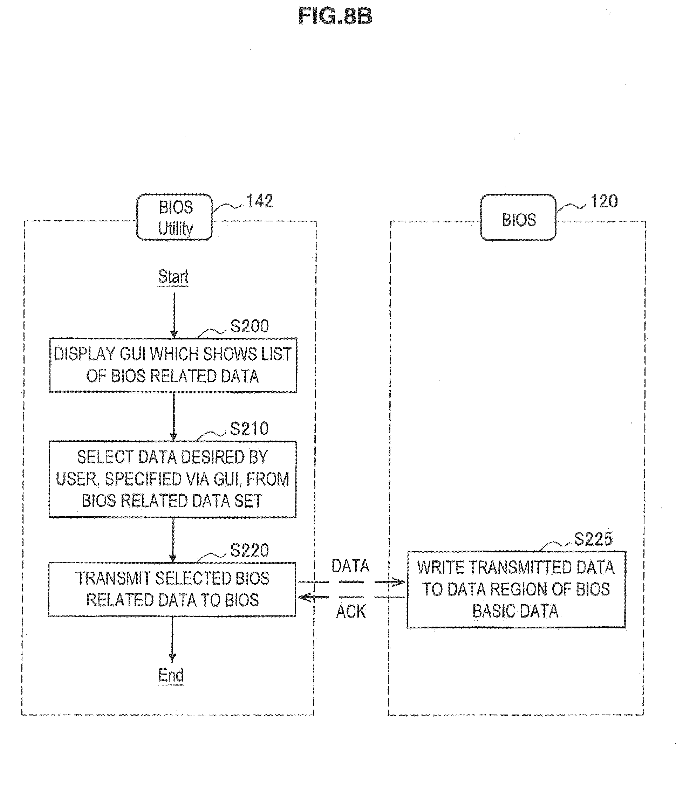

Next two examples of the flow of processes according to the present embodiment will be described by using FIGS. 8A and 8B.

### [5-1 First example]

FIG. 8A is a flow chart which shows a first example of the flow of processes according to the present embodiment. In the first example, the BIOS related data is automatically selected based on the OS setup registered by the user. The processes shown in FIG. 8A can be started, for example, by the initial registration of the OS setup or by a change of the OS setup.

With reference to FIG. 8A, first the BIOS utility 142 acquires the OS setup registered by the user (step S100). The OS setup acquired here can include, for example, a language setup, a region setup, and other types of setups.

Next, the BIOS utility 142 selects the BIOS related data to be written to the flash memory 108, based on the acquired OS setup, from the BIOS related data set D2 stored in the HDD 110 (step S110). For example, the BIOS utility 142 may select the screen data of the BIOS screen corresponding to the same language as that of the language setup of the OS. Further, the BIOS utility 142 may select the contact destination data corresponding to the same region as that of the region setup of the OS. Further, the BIOS utility 142 may select image data of a character (a local character or the like) corresponding to the region setup of the OS.

Next, the BIOS utility 142 verifies the BIOS basic data D3 presently set in the flash memory 108 by making an inquiry to the BIOS 120 (step S120). The BIOS 120 returns the present setup in accordance with the inquiry from the BIOS utility 142 (step S125). Here, if the BIOS related data selected in step S110 is the same as the BIOS basic data D3 presently set in the flash memory 108, the subsequent processes are skipped (step S130).

In the case where the data is not the same, the BIOS utility 142 transmits the BIOS related data selected in step S110 to the BIOS 120 for writing to the flash memory 108 (step S140). The BIOS 120 temporarily stores, for example, the transmitted data in a temporary region of the flash memory 108 (step S145).

Next, the BIOS utility 142 restarts the information processing apparatus 100 (step S150). The BIOS utility 142 may request approval for execution of the startup from the user before restarting the information processing apparatus 100.

When the information processing apparatus 100 is restarted, the BIOS 120 writes the BIOS related data stored in the temporary region to a data region of the BIOS basic data D3 (step S155).

Afterwards, when the BIOS 120 displays a BIOS screen, the BIOS basic data D3 updated in step S155 is used by the BIOS 120.

### [5-2. Second example]

FIG. 8B is a flow chart which shows a second example of the flow of processes according to the present embodiment. In the second example, the BIOS related data is selected by the user. The processes shown in FIG. 8B can be executed, for example, along with interactions with the user via the user interface such as shown in FIGS. 7B or 7C.

With reference to FIG. 8B, in order to allow the user to select or change the BIOS related data, the BIOS utility 142 displays a graphical user interface (GUI), which shows a list of the BIOS related data, on the display 112 (step S200).

Next, the BIOS utility 142 selects data desired by the user, which is specified via the displayed GUI, from the BIOS related data set D2 stored in the HDD 110 (step S210).

Next, the BIOS utility 142 transmits the BIOS related data selected from the BIOS related data set D2 to the BIOS 120 for writing to the flash memory 108 (step S220). The BIOS 120 writes the transmitted data to a data region of the BIOS basic data D3 (step S225).

Afterwards, when the BIOS 120 displays a BIOS screen, the BIOS basic data D3 updated in step S225 is used by the BIOS 120.

Note that also in the example of FIG. 8B, similar to the first example, the BIOS utility 142 may verify whether or not the same BIOS related data has already been written before transmitting the BIOS related data to the BIOS 120. Further, in the example of FIG. 8A, such a verification may be omitted.

Further, also in the example of FIG. 8B, an update of the BIOS basic data D2 may be performed when restarting the information processing apparatus 100. Further, in the example of FIG. 8A, the BIOS basic data D3 may be updated without the information processing apparatus 100 restarting.

### <6. Conclusion>

Up to this point, various embodiments of the technology according to the present disclosure have been described in detail by using FIGS. 1 to 8B. According to the above described embodiments, in a computer architecture which has a semiconductor storage device storing the BIOS and an auxiliary storage device, a plurality of pieces of BIOS related data capable of being used by the BIOS are stored in the auxiliary storage device, and the BIOS related data to be actually used by the BIOS, from among this plurality of pieces of BIOS related data, is written to the semiconductor storage device. Therefore, when a failure such as a hard disk failure occurs, for example, the BIOS related data to be used by the BIOS is not lost. Further, since the BIOS related data not used by the BIOS is stored in the auxiliary storage device, the storage capacity of the semiconductor storage device can be saved.

Further, according to the above described embodiments, the BIOS related data includes screen data for each language for multilingual support. Therefore, in computer products which provide multilingual support, the number of supported languages can be increased at low cost and without increasing the size of the semiconductor storage device.

Further, according to the above described embodiments, the BIOS related data includes contact destination data for a contact destination displayed on the BIOS screen. Therefore, in computer products which can be sold in a number of regions, an appropriate contact destination for each region can be displayed on the BIOS screen without increasing the size of the semiconductor storage device.

Further, according to the above described embodiments, the BIOS related data written to the semiconductor storage device can be automatically selected, based on an OS setup registered by a user. Therefore, appropriate BIOS related data can be written to the semiconductor storage device without imposing new workloads on the user for the setup of the BIOS.

Further, according to the above described embodiments, a user interface can be provided for allowing a user to select or change the BIOS related data. Therefore, the user can freely change the setup of the BIOS as necessary.

Further, according to the above described embodiments, a help screen or an error screen is displayed when a failure occurs in the apparatus, by using the BIOS related data written to the semiconductor storage device. Therefore, a user can use a screen displayed in an appropriate language (for example, his or her native language) which is not the default language, or the user can proceed with work for cause investigation and recovery of the failure by contacting a contact destination appropriately corresponding to his or her location.

Further, according to the above described embodiments, at least one piece of BIOS related data used when the apparatus is started for the first time is stored in advance in the semiconductor storage device. Therefore, even if the auxiliary storage device falls into an unusable state before the apparatus is started for the first time, for example, due to an initial malfunction of the hardware or the like, the BIOS can display a help screen or an error screen by using the at least one piece of BIOS related data.

It should be understood by those skilled in the art that various modifications, combinations, subcombinations and alterations may occur depending on design requirements and other factors insofar as they are within the scope of the appended claims or the equivalents thereof.

Additionally, the present technology may also be configured as below.
(1) An information processing apparatus, including:
   a semiconductor storage device which stores a basic input output system (BIOS);
   an auxiliary storage device which stores a plurality of pieces of BIOS related data capable of being used by the BIOS; and
   a control section which writes one or more pieces of BIOS related data to be used by the BIOS, from among the plurality of pieces of BIOS related data stored in the auxiliary storage device, to the semiconductor storage device.
(2) The information processing apparatus according to (1),
   wherein the plurality of pieces of BIOS related data each include screen data on a language-basis, the language being available on a BIOS screen.
(3) The information processing apparatus according to(1) or (2),
   wherein the plurality of pieces of BIOS related data include contact destination data for a contact destination displayed on a BIOS screen.
(4) The information processing apparatus according to (2) or (3),
   wherein the control section selects the one or more pieces of BIOS related data written to the semiconductor storage device based on an operating system(OS) setup registered by a user for an OS loaded by the BIOS.
(5) The information processing apparatus according to (4),
   wherein the OS setup includes a setup related to languages or regions.
(6) The information processing apparatus according to any one of (2) to (5),
   wherein the BIOS screen includes a help screen or an error screen displayed when a failure occurs in the information processing apparatus.
(7) The information processing apparatus according to any one of (1) to (6),
   wherein the control section provides a user interface for allowing a user to select or change the one or more pieces of BIOS related data written to the semiconductor storage device.
(8) The information processing apparatus according to any one of (1) to (7),
   wherein the control section writes the one or more pieces of BIOS related data to the semiconductor storage device by executing a utility program stored in the auxiliary storage device.
(9) The information processing apparatus according to any one of (1) to (8),
   wherein the semiconductor storage device stores in advance at least one piece of BIOS related data used when the information processing apparatus is started for a first time.
(10) The information processing apparatus according to any one of (1) to (9),
   wherein the plurality of pieces of BIOS related data include screen data of a startup screen displayed at a time of starting the information processing apparatus.
(11) The information processing apparatus according to any one of (1) to (10),
   wherein the plurality of pieces of BIOS related data include program data for a function supported by the BIOS.
(12) The information processing apparatus according to any one of (1) to (11),
   wherein the plurality of pieces of BIOS related data includes image data or text data for characters or messages displayed on a BIOS screen.
(13) The information processing apparatus according to any one of (1) to (12),
   wherein the auxiliary storage device is a hard disk drive.
(14) The information processing apparatus according to (1) to (13),
   wherein the auxiliary storage device stores an operating system (OS) loaded by the BIOS.
(15) An information processing method executed by a control section of an information processing apparatus including a semiconductor storage device which stores a basic input output system (BIOS) and an auxiliary storage device which stores a plurality of pieces of BIOS related data capable of being used by the BIOS, the information processing method including:
   writing one or more pieces of BIOS related data to be used by the BIOS, from among the plurality of pieces of BIOS related data stored in the auxiliary storage device, to the semiconductor storage device.
(16) A program for causing a computer to function as, the computer controlling an information processing apparatus including a semiconductor storage device which stores a basic input output system (BIOS) and an auxiliary storage device which stores a plurality of pieces of BIOS related data capable of being used by the BIOS:
   a control section which writes one or more pieces of BIOS related data to be used by the BIOS, from among the plurality of pieces of BIOS related data stored in the auxiliary storage device, to the semiconductor storage device.

The present disclosure contains subject matter related to that disclosed in Japanese Priority Patent Application JP 2012-148357 filed in the Japan Patent Office on July 2, 2012.

## Claims

1. An information processing apparatus, comprising:
a semiconductor storage device which stores a basic input output system (BIOS);
an auxiliary storage device which stores a plurality of pieces of BIOS related data capable of being used by the BIOS; and
a control section which writes one or more pieces of BIOS related data to be used by the BIOS, from among the plurality of pieces of BIOS related data stored in the auxiliary storage device, to the semiconductor storage device.

2. The information processing apparatus according to claim 1,
wherein the plurality of pieces of BIOS related data each include screen data on a language-basis, the language being available on a BIOS screen.

3. The information processing apparatus according to claim 1,
wherein the plurality of pieces of BIOS related data include contact destination data for a contact destination displayed on a BIOS screen.

4. The information processing apparatus according to claim 2,
wherein the control section selects the one or more pieces of BIOS related data written to the semiconductor storage device based on an operating system(OS) setup registered by a user for an OS loaded by the BIOS.

5. The information processing apparatus according to claim 4,
wherein the OS setup includes a setup related to languages or regions.

6. The information processing apparatus according to claim 2,
wherein the BIOS screen includes a help screen or an error screen displayed when a failure occurs in the information processing apparatus.

7. The information processing apparatus according to claim 1,
wherein the control section provides a user interface for allowing a user to select or change the one or more pieces of BIOS related data written to the semiconductor storage device.

8. The information processing apparatus according to claim 1,
wherein the control section writes the one or more pieces of BIOS related data to the semiconductor storage device by executing a utility program stored in the auxiliary storage device.

9. The information processing apparatus according to claim 1,
wherein the semiconductor storage device stores in advance at least one piece of BIOS related data used when the information processing apparatus is started for a first time.

10. The information processing apparatus according to claim 1,
wherein the plurality of pieces of BIOS related data include at least one of:
screen data of a startup screen displayed at a time of starting the information processing apparatus; and
program data for a function supported by the BIOS.

11. The information processing apparatus according to claim 1,
wherein the plurality of pieces of BIOS related data include image data or text data for characters or messages displayed on a BIOS screen.

12. The information processing apparatus according to claim 1,
wherein the auxiliary storage device is a hard disk drive.

13. The information processing apparatus according to claim 1,
wherein the auxiliary storage device stores an operating system (OS) loaded by the BIOS.

14. An information processing method executed by a control section of an information processing apparatus including a semiconductor storage device which stores a basic input output system (BIOS) and an auxiliary storage device which stores a plurality of pieces of BIOS related data capable of being used by the BIOS, the information processing method comprising:
writing one or more pieces of BIOS related data to be used by the BIOS, from among the plurality of pieces of BIOS related data stored in the auxiliary storage device, to the semiconductor storage device.

15. A program for causing a computer to function as, the computer controlling an information processing apparatus including a semiconductor storage device which stores a basic input output system (BIOS) and an auxiliary storage device which stores a plurality of pieces of BIOS related data capable of being used by the BIOS:
a control section which writes one or more pieces of BIOS related data to be used by the BIOS, from among the plurality of pieces of BIOS related data stored in the auxiliary storage device, to the semiconductor storage device.
